(19) Europäisches Patentamt

European Patent Office

Office européen des brevets

(11) **EP 1 065 628 B1**

(12) **EUROPÄISCHE PATENTSCHRIFT**

(45) Veröffentlichungstag und Bekanntmachung des Hinweises auf die Patenterteilung:
**13.03.2002 Patentblatt 2002/11**

(51) Int Cl.$^7$: **G06T 7/00**, G01B 11/24

(21) Anmeldenummer: **00112745.5**

(22) Anmeldetag: **16.06.2000**

(54) **Optische 3-D Messung mit mehreren Näherungspunkten**

Optical 3-D measurement with several approximation points

Mesure 3-D optique avec plusieurs points d'approximation

(84) Benannte Vertragsstaaten:
**AT BE CH CY DE DK ES FI FR GB GR IE IT LI LU MC NL PT SE**

(30) Priorität: **21.06.1999 DE 19928341**

(43) Veröffentlichungstag der Anmeldung:
**03.01.2001 Patentblatt 2001/01**

(73) Patentinhaber: **INB Vision AG**
**39120 Magdeburg (DE)**

(72) Erfinder:
• **Albrecht, Peter**
**39104 Magdeburg (DE)**
• **Michaelis, Bernd, Prof.Dr.-Ing.habil.**
**39175 Biederitz (DE)**

(74) Vertreter: **Leinung, Günter**
**Patentanwalt,**
**Olvenstedter Strasse 15**
**39108 Magdeburg (DE)**

(56) Entgegenhaltungen:
**EP-A- 0 631 250**          **DE-C- 19 623 172**
**GB-A- 2 244 621**          **US-A- 5 655 033**
**US-A- 5 727 078**

• **P.ALBRECHT AND B.MICHAELIS:**
**"Improvement of the Spatial Resolution of an Optical 3-D Measurement Procedure" IEEE INSTRUMENTATION AND MEASUREMENT TECHNOLOGY CONFERENCE OTTAWA CANADA, MAY 19-21, 1997, 19. Mai 1997 (1997-05-19), Seiten 124-129, XP000725373**

**Beschreibung**

Die Erfindung betrifft ein Verfahren zur dreidimensionalen optischen Vermessung von Objektoberflächen, bei dem Muster auf die Objektoberfläche projiziert und die Objektkoordinaten unter Anwendung einer Ähnlichkeitsanalyse der Grauwertverläufe in den von mindestens zwei Matrixkameras aufgenommenen Bildern der Objektoberfläche bestimmt werden.

Bekannte Verfahren zur dreidimensionalen optischen Objekt-Vermessung im Nahbereich sind z.B. photogrammetrische Verfahren oder Streifenprojektions-Verfahren. Während bei den Streifenprojektions-Verfahren auf das zu vermessende Objekt geometrisch möglichst exakt definierte, streifenförmige Muster projiziert werden, können bei der Photogrammetrie mehr oder weniger willkürliche Muster verwendet werden.

Der Projektor zur Projektion von Mustern auf die Objektoberfläche wird nachfolgend als Musterprojektor bezeichnet. Die Einrichtung zur Erzeugung eines Bildes der Objektoberfläche und der Sensor für die pixelweise Erfassung der Intensitätsverteilung in diesem Bild wird nachfolgend und insbesondere in den Ansprüchen zusammenfassend als Matrixkamera bezeichnet. Insofern werden unter die Bezeichnung Matrixkamera insbesondere CCD-Kameras und sonstige Anordnungen subsumiert, die geeignet sind, pixelweise eine Intensitätsverteilung zu erfassen.

Unter einem Punkt im Subpixelbereich wird ein Ort auf dem Sensor verstanden, der zwischen den Pixelmittelpunkten liegt. Da man im allgemeinen davon ausgeht, daß die gemessenen Grauwerte nur für die Mittelpunkte der Pixel gelten, sollte der Grauwert für einen Punkt im Subpixelbereich aus den umliegenden Pixeln interpoliert werden. Hierfür eignet sich z. B. die bilineare Interpolation, bei der der Grauwert aus den 4 umliegenden Pixeln berechnet wird

Zu einem ausgewählten Pixel des Sensors einer 1. Matrixkamera kann der nachfolgend als korrespondierender Punkt bezeichnete Ort auf dem Sensor einer 2. Matrixkamera so bestimmt werden, daß auf dem ausgewählten Pixel und dem korrespondierenden Punkt der gleiche Teil der Oberfläche des zu vermessenden Körpers abgebildet wird.

Bei Streifenprojektions-Verfahren besteht der Meßaufbau im einfachsten Fall aus einem Musterprojektor zur Projektion einer streifenförmigen Struktur, einer Matrixkamera (z.B. DE3938714) sowie dem zu vermessenden Objekt. Die Formen der auf die Oberfläche projizierten Streifen, die in determinierter Weise vom Objekt beeinflußt werden, werden vom Sensors erfaßt und können mittels eines nachgeschalteten Rechners ausgewertet werden.

Ein spezielles Streifenprojektions-Verfahren ist das Phasenschiebeverfahren, das relativ hohe Genauigkeiten der gemessenen 3D-Koordinaten gewährleistet. Wesentliche Aufgaben bei der Auswertung der von den Matrixkameras erfaßten Intensitätsverteilungen bestehen darin, die absolute Ordnung der einzelnen Streifen sowie für jeden Bildpunkt die Phasenlage zu bestimmen.

Für letzteres werden von der Objektoberfläche zeitlich nacheinander N ≥ 3 Einzelaufhahmen erzeugt, wobei das auf die Oberfläche projizierte, periodische Streifenmuster zwischen den Aufnahmen um jeweils den n-ten Teil der Streifenperiode verschoben wird. Somit wird für jeden Bildpunkt ein Satz von N Einzelaufnahmen erhalten

Ein genereller Nachteil der Koordinatenmessung nach dem Phasenschiebe-Verfahren besteht in der Notwendigkeit, den Musterprojektor zu kalibrieren. Dies resultiert aus dem Prinzip, die 3D-Koordinaten mit Hilfe der Matrixkamera und des Projektors (i. allg. durch Triangulation) zu bestimmen. Damit wird dem Projektor eine Funktion übertragen, die normalerweise von einer Kamera übernommen wird. Die Kalibrierung des Projektors ist im allgemeinen schwieriger durchzuführen als eine Kamerakalibrierung. Des weiteren sind die Verzeichnungspararneter meist größer und lassen sich nicht so exakt bestimmen wie bei einer Matrixkamera. Dies kann eine größere Unsicherheit bei der Berechnung der Raumkoordinaten verursachen.

Ein weiteres Problem ergibt sich daraus, daß der Grauwertverlauf der Streifen oft nicht ideal sinusförmig ist. Diese Abweichungen können direkt das Meßergebnis verfälschen und führen damit zu einer geringeren Meßgenauigkeit.

Bei photogrammetrischen Verfahren basiert die Berechnung der Koordinaten der Objektoberfläche auf den von mindestens zwei Kameras erzeugten Bildern der Objektoberfläche

Ein Vorteil der Photogrammetrie ist die hohe Meßgenauigkeit. Kritisch kann die Vermessung jedoch im Bereich starker Krümmungen oder bei Unstetigkeiten der Objektoberfläche werden, wenn nur ein Bildpaar verwendet wird, weil die Lagebestimmung korrespondierender Bildpunkte üblicherweise über eine Ähnlichkeitsanalyse der Grauwertverläufe in zwei Kamerabildern innerhalb einer definierten Meßfläche mit einer Größe von einigen Pixeln (z.B. 15x15) erfolgt. Als Maß für die Ähnlichkeit wird üblicherweise das Maximum der Korrelationsfunktion oder das Minimum der Summe der Fehlerquadrate dieser beiden Grauwertverläufe verwendet.

Die Meßgenauigkeit dieses Verfahrens ist daher stark von der Größe der Meßfläche abhängig.

Kritische Oberflächen, d.h. Oberflächen mit starken Krümmungen oder Unstetigkeiten verursachen daher systematische Meßfehler. Um diesen Nachteil abzuschwächen, konnte die Größe der Meßfläche verkleinert werden. Damit würde jedoch die für die Ähnlichkeitsanalyse der Grauwertverläufe verwendete Pixelanzahl und damit die Genauigkeit der mittels Ähnlichkeitsanalyse bestimmten Lage der korrespondierenden Punkten reduziert. Insofern erscheint dieser Lösungsansatz nur bedingt geeignet.

Alternativ wurde in der DE19623172 bereits ein Meßverfahren beschrieben, bei dem die Korrelationsfläche lediglich ein Pixel beträgt. Dies ist realisierbar, indem zunächst nacheinander n (z. B. 12) verschiedene Muster auf die Objektoberfläche projiziert und die entsprechende Anzahl von Bildpaaren aufgenommen werden. Somit liegt für ein ausgewähltes Pixel einer Kamera eine Folge von n Grauwerten vor Zur Bestimmung des korrespondierenden Punktes wird der Korrelationskoeffizient zwischen dieser Grauwertfolge und der Grauwertfolge eines Punktes der anderen Kamera genutzt. Der Algorithmus basiert auf der Suche nach dem Korrelationsmaximum entlang der Epipolarlinie. Der Nachteil dieses Verfahrens besteht darin, daß im Objektkoordinatensystem nicht äquidistant und auch nicht entlang von vorgegebenen Richtungsvektoren im Objektkoordinatensystem gemessen werden kann.

Der Erfindung liegt daher folgende Aufgabe zugrunde: Bei einem Verfahren zur dreidimensionalen optischen Vermessung von Objektoberflächen, bei dem Muster auf die Objektoberfläche projiziert und die Objektkoordinaten unter Anwendung einer Ähnlichkeitsanalyse der Grauwertverläufe in den von mindestens zwei Matrixkameras aufgenommenen Bildern der Objektoberfläche bestimmt werden, soll im Objektkoordinatensystem äquidistant und/oder entlang von vorgegebenen Richtungsvektoren im Objektkoordinatensystem gemessen werden können.

Erfindungsgemäß wird diese Aufgabe durch ein Verfahren gemäß Anspruch 1 gelöst.

Die Funktionsweise des erfindungsgemäßen Meßverfahrens, daß mit einem Meßaufbau realisierbar ist, der aus mindestens zwei Matrixkameras und einem Musterprojektor sowie dem zu vermessenden Körper besteht, läßt sich wie folgt charakterisieren.

In vorgebbaren Zeitabständen wird N-mal nacheinander auf die Oberfläche des zu vermessenden Körpers ein Muster derart projiziert, daß auf der Körperoberfläche temporär N unterschiedliche Intensitätsverteilungen erzeugt werden. Jedem Punkt des zu vermessenden Oberflächenbereiches läßt sich daher eine Folge von N temporären Intensitätswerten zuordnen. Die Musterstruktur und die Art und Weise der Projektion soll zweckmäßigerweise der Bedingung genügen, daß in jedem Punkt der zu vermessenden Körperoberfläche möglichst hohe Gradienten in der Folge der N Intensitätswerte auftreten. Jede der so erzeugten temporären Intensitätsverteilungen wird mit mindestens $k \geq 2$ Matrixkameras erfaßt. Für jede Matrixkamera werden dann pixelweise die Grauwerte in den so erzeugten N Bildern bestimmt.

Nun wird in an sich bekannter Weise ein erster Näherungspunkt zur Berechnung eines ersten Meßpunktes auf der Objektoberfläche bestimmt. Mittels mathematischer Projektion werden diesem Näherungspunkt oder einer diesem Näherungspunkt benachbarten Punktmenge Koordinaten in den Sensorflächen der beiden Matrixkameras zugeordnet.

Die Grauwerte in den N Bildern jeder der beiden Matrixkameras an den Positionen der projizierten Punkte werden durch Subpixelinterpolation bestimmt und daraus ein Paar von Grauwertmengen ermittelt.

In der Nähe des ersten Näherungspunktes wird mindestens ein weiterer Näherungspunkt bestimmt.

Mittels mathematischer Projektion werden diesen Näherungspunkten oder den diesen Näherungspunkten benachbarten Punktmengen wiederum Koordinaten in den Sensorflächen der beiden Matrixkameras zugeordnet. Anschließend werden wieder die Grauwerte in den N Bildern jeder der beiden Matrixkameras an den Positionen der projizierten Punkte durch Subpixelinterpolation bestimmt und daraus mindestens ein weiters Paar von Grauwertmengen ermittelt. In einem nächsten Schritt werden die Ähnlichkeitsmaße der zu jedem der vorstehend genannten Paare von Grauwertmengen bestimmt. Sodann wird in an sich bekannter Weise der Meßpunkt auf der Oberfläche des Meßobjektes bestimmt, indem derjenige der Näherungspunkte oder eine ihm benachbarte Punktmenge ermittelt wird, für den eines der nach den vorhergehenden Schritten bestimmten Paare von Grauwertmengen eine maximale Ähnlichkeit aufweist

Das erfindungsgemäße Meßverfahren ist aufgrund seiner örtlichen Auflösung und der geringen Meßunsicherheit besonders für die Vermessung der Karosserien von Kraftfahrzeugen oder Teilen der Karosserie geeignet.

Im Gegensatz zu bekannten Meßverfahren ist es mit dem erfindungsgemäßen Verfahren möglich, hochauflösend zu messen und bei Bestimmung einer Meßpunktmenge ist es sehr einfach möglich, zu gewährleisten, daß die Meßpunkte äquidistant in dem Objektkoordinatensystem vorliegen. Dies ist ein wesentlicher Vorteil gegenüber dem aus der DE 19623172 bekannten Meßverfahren.

Desweiteren ist es möglich, die Näherungspunkte entlang von vorgegebenen Richtungsvektoren im Objektkoordinatensystem zu verschieben und somit einen Meßpunkt zu erhalten, der auf dem Durchstoßpunkt des Richtungsvektors durch die Objektoberfläche liegt.

Vorteilhafte Ausführungsformen der Erfindung und deren Vorteile ergeben sich unmittelbar aus den Unteransprüchen.

Die Meßgeschwindigkeit kann wesentlich erhöht werden, indem mindestens zwei Ähnlichkeitsmaße von Grauwertmengen benutzt werden, um einen neuen Näherungspunkt zu bestimmen. Hierfür kann z. B. ein Gradientenanstiegsverfahren oder das Verfahren nach Newton benutzt werden. Durch diese Methode wird erreicht daß der neue Näherungspunkt wesentlich näher zur realen Oberfläche des Meßobjektes liegt, als die ersten Näherungspunkte. Dies reduziert den Aufwand zur Bestimmung des Meßpunktes.

In einer besonders vorteilhaften Ausführungsform der Erfindung liegt der Richtungsvektor, entlang dem die Näherungspunkte verschoben werden, parallel zu der Achse des Objektkoordinatensystems, auf welche die Höhenkoordinaten der Meßpunkte bezogen werden. Somit können die Meßpunkte äquidistant bestimmt werden.

In einer anderen vorteilhaften Ausführungsform der Erfindung werden die Koordinaten neuer Näherungspunkte unter Berücksichtigung der Ähnlichkeitsmaße bestimmt, die einer bestimmten Anzahl von Näherungspunkten zugeordnet werden.

Weitere vorteilhafte Ausführungsformen betreffen die Ausgestaltung der projizierten Muster. Als effektiv haben sich Streifenmuster mit einer Orientierung erwiesen, bei der die Längsrichtung der auf die Sensorebenen der Matrixkameras abgebildeten Streifen annähernd senkrecht zu den Epipolarlinien verläuft Dadurch werden günstige Grauwertgradienten und somit ein hoher Informationsgehalt entlang dieser Linien erhalten. Dies wirkt sich günstig auf die Genauigkeit der Ortsbestimmung der korrespondierenden Punkte aus. Die Grauwerte quer zur Linienrichtung sollten möglichst im gesamten zu vermessenden Bereich Änderungen aufweisen Hierfür bietet sich z. B ein möglichst sinusförmiger Grauwertverlauf an.

Die notwendigen N unterschiedlichen Intensitätsverteilungen auf der zu vermessenden Objektoberfläche können in unterschiedlicher Weise erzeugt werden Nach einer ersten Variante wird das Streifenmuster zwischen den Bildaufnahmen jeweils um einen Bruchteil seiner Periode verschoben. Bei einer weiteren Variante werden die unterschiedlichen Intensitätsverteilungen durch Projektion von Streifenmustern mit unterschiedlicher Periode oder durch eine Kombination beider Varianten erzeugt.

Bei einer anderen vorteilhaften Ausführungsform der Erfindung weisen die projizierten Muster eine stochastische Struktur auf. Die zeitlich aufeinanderfolgenden unterschiedlichen Intensitätsverteilungen auf der Objektoberfläche werden in diesem Fall durch Translation und/oder Rotation des projizierten Musters oder durch Änderung der Struktur des Musters erzeugt.

Die erfindungsgemäße Lösung wird einschließlich ihrer Funktionsweise und des notwendigen mathematischen Apparates nachstehend anhand eines Ausführungsbeispieles, das von einem Meßaufbau mit einem Projektor und mindestens zwei Matrixkameras ausgeht, näher erläutert.

Figur 1:   eine schematische Darstellung eines Meßaufbaus für die Vermessung einer Autotür nach dem erfindungsgemäßen Verfahren,

Figur 2:   eine schematische Darstellung eines Meßaufbaus dem erfindungsgemäßen Verfahren mit einem Musterprojektor zur Projektion mehrerer Muster auf das Meßobjekt,

Figur 3:   ein Koordinatensystem mit einem in der Höhenkoordinate verschiebbaren Näherungspunkt,

Figur 4:   eine schematische Darstellung der Projektion eines Näherungspunktes in die Sensorflächen der Kameras, um zwei Grauwertmengen zu erhalten,

Figur 5:   : Bestimmung eines neuen Näherungspunktes aus einem bekannten Näherungspunktes mittels Gradientenanstiegsverfahren,

Figur 6:   Bestimmung von Näherungspunkten entlang eines vorgegebenen Richtungsvektors,

Figur 7:   Bestimmung eines Meßpunktes entlang eines vorgegebenen Richtungsvektors,

Figur 8.   Modellfläche aus 3x3 Raumpunkten zur Approximation der Oberfläche des Meßobjektes.

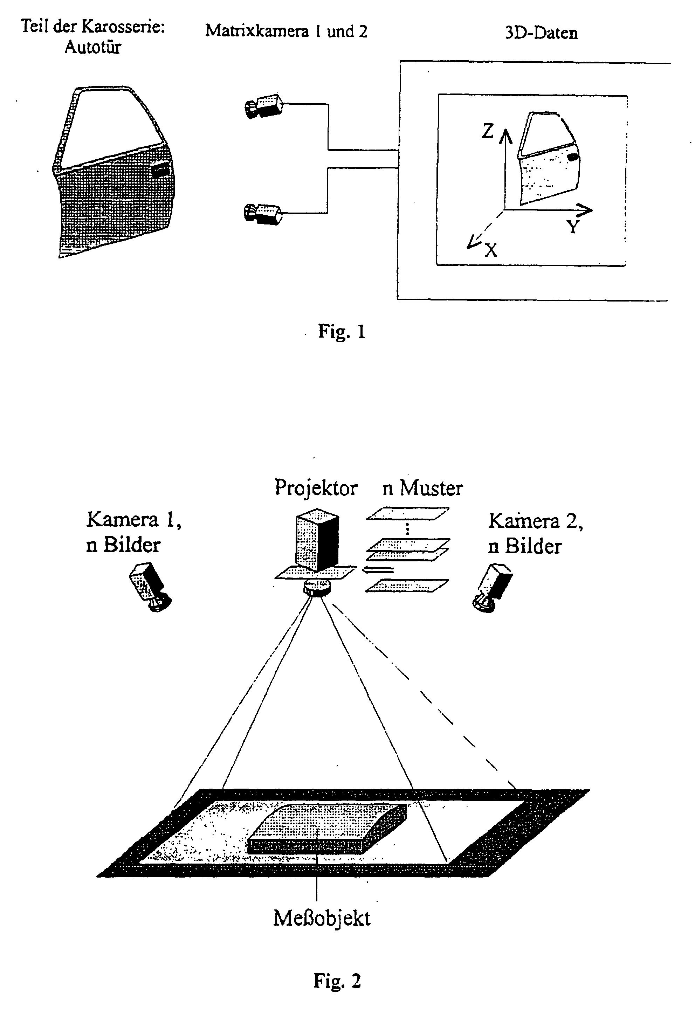

Ausgangspunkt für die nachfolgenden drei Beispiele ist die Vermessung einer Autotür (Fig 1).

**Beispiel 1:** Approximation der Oberfläche durch einen Näherungspunkt mit variabler Z-Koordinate

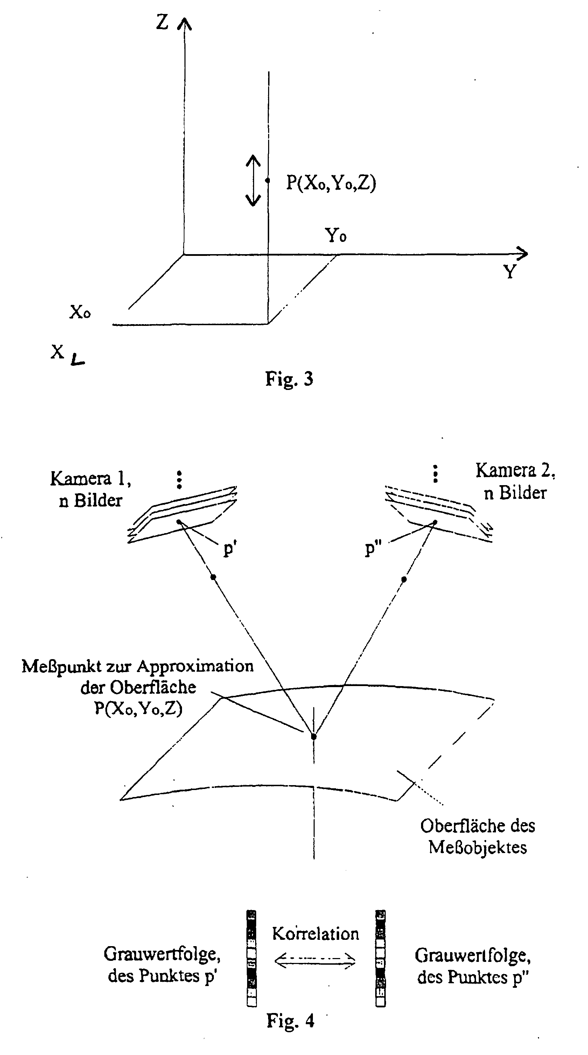

In diesem Beispiel wird ein parallel zur Z-Achse (Fig. 3) verschiebbarer Raumpunkt zur Approximation der Oberfläche vorausgesetzt. Entsprechend Fig. 2 werden auf die Oberfläche des Meßobjektes nacheinander N (z.B. 12) unterschiedliche Muster projiziert und die entsprechende Anzahl von Bildpaaren aufgenommen Durch die hieraus resultierende höhere Informationsmenge wird eine Vermessung mit hoher räumlicher Auflösung ermöglicht.

Ausgangspunkt bei der Bestimmung einer 3D-Oberflächenkoordinate ist ein Näherungswert. Dieser kann durch verschiedene Möglichkeiten gewonnen werden, z.B. durch Verwendung von gray-codierten Mustern. Die Koordinaten des Näherungswertes seien $X_0$, $Y_0$ und $Z$ (Fig. 3).

Im Verlauf der iterativen Annäherung an die reale Oberfläche bleiben $X_0$ und $Y_0$ konstant. Es erfolgt lediglich eine Variation der Z-Koordinate. Dies bewirkt eine Vermessung senkrecht zur XY-Ebene des Raumkoordinatensystems. Dadurch kann für eine vorgegebene Position $X_0$, $Y_0$ eine Oberflächenkoordinate bestimmt werden. Hieraus resultiert die Möglichkeit, 3D-Punkte mit einem äquidistanten Raster zu vermessen.

Der erste Schritt innerhalb eines Iterationszyklus' ist die mathematische Projektion des aktuellen Raumpunktes in beide Sensorflächen (Fig. 4). Diese Berechnung wird auf der Basis der Kollinearitätsgleichungen durchgeführt:

$$x = c \cdot \frac{r_{11} \cdot (X_0 - X_T) + r_{12} \cdot (Y_0 - Y_T) + r_{13} \cdot (Z - Z_T)}{r_{31} \cdot (X_0 - X_T) + r_{32} \cdot (Y_0 - Y_T) + r_{33} \cdot (Z - Z_T)} + dx$$

$$y = c \cdot \frac{r_{21} \cdot (X_0 - X_T) + r_{22} \cdot (Y_0 - Y_T) + r_{23} \cdot (Z - Z_T)}{r_{31} \cdot (X_0 - X_T) + r_{32} \cdot (Y_0 - Y_T) + r_{33} \cdot (Z - Z_T)} + dy$$

mit.

*dx, dy* bildfehlerbeschreibende Terme
$X_0, Y_0, Z$ : Koordinaten des Raumpunktes zur Approximation der Oberfläche

Mit den bildfehlerbeschreibenden Termen *dx* und *dy* werden die Verzeichnungen der Objektive berücksichtigt. Hierdurch ist eine weitgehend exakte mathematische Modellierung der realen Aufnahmesituation möglich.

Das Ergebnis der Projektionen sind zwei Punkte p' und p'' mit definierten Werten im Subpixelbereich der Sensorkoordinatensysteme.
Diesen Punkten können demnach aus den realen Aufnahmen die entsprechenden Grauwerte zugewiesen werden. Dies erfolgt durch eine Berechnung aus den Grauwerten der umliegenden Pixel durch Subpixelinterpolation. Jeder der beiden Punkte erhält auf diese Weise aus jeder Bildaufnahme einen Grauwert und somit N Grauwerte aus der Gesamtheit der aufgenommenen Bilder. Diese Grauwerte bilden eine Grauwertfolge (Figur 4).
Der Kreuzkorrelationskoeffizient zwischen den beiden Grauwertfolgen kann als Kriterium zur Bestimmung des korrespondierenden Punktepaares genutzt werden. Ist er maximal, dann wird davon ausgegangen, daß die beiden projizierten Punkte korrespondierende sind. In diesem Fall kann der Raumpunkt als Approximation der realen Oberfläche und damit als Meßpunkt angesehen werden.

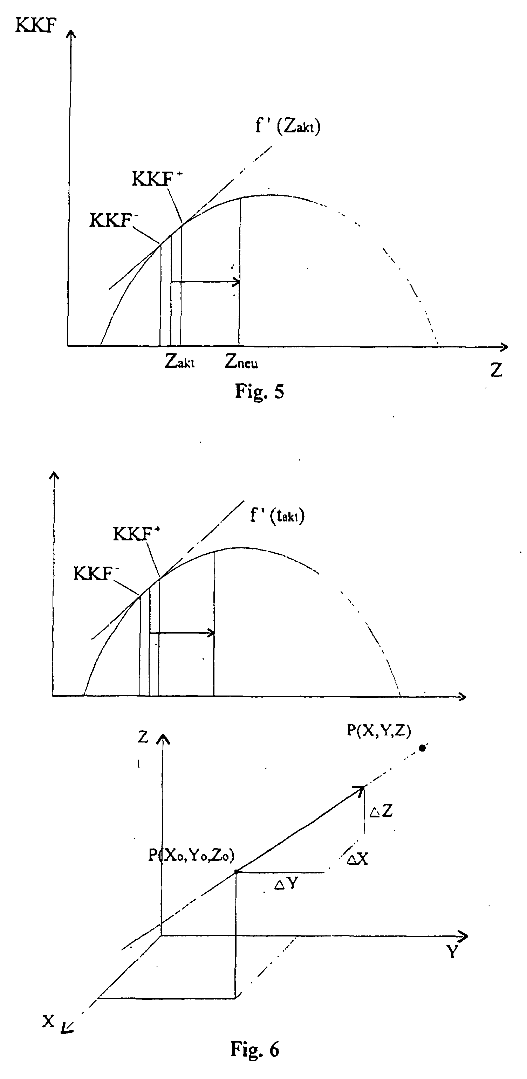

Die Suche nach der Maximumstelle kann mit Hilfe eines Gradientenanstiegsverfahrens wie folgt realisiert werden:
Zunächst wird der Anstieg der Kreuzkorrelationsfunktion für die aktuelle Z-Koordinate des Raumpunktes benötigt. Hierfür wird diese Koordinate um einen kleinen Betrag *dZ* verringert und erhöht sowie die Projektionen in die Bildebenen berechnet. Die beiden entsprechenden Korrelationswerte der Grauwertfolgen (Fig. 5) werden zur Bestimmung des Anstieges verwendet:

$$f'(Z_{akt}) \cong \frac{KKF^+ - KKF^-}{2 \cdot dZ}$$

mit:

$f'(Z_{akt})$ : Anstieg der Kreuzkorrelationsfunktion bei der aktuellen Z-Koordinate

$KKF^+, KKF^-$ : Korrelationswerte an den variierten Z-Koordinaten

Ausgehend von diesem Wert kann eine verbesserte Raumkoordinate $Z_{neu}$ erhalten werden:

$$Z_{neu} = Z_{akt} + \lambda \cdot f'(Z_{akt})$$

mit:

$\lambda$: Faktor zur Festlegung der Schrittweite

Auf diese Weise kann sich schrittweise dem Maximum genähert werden bis eine festgelegte Abbruchschwelle unterschritten wird. Die entsprechende Z-Koordinate gilt als Meßpunkt an der Stelle $(X_0, Y_0)$.

**Beispiel 2:** Approximation der Oberfläche durch einen Näherungspunkt basierend auf einem Richtungsvektor

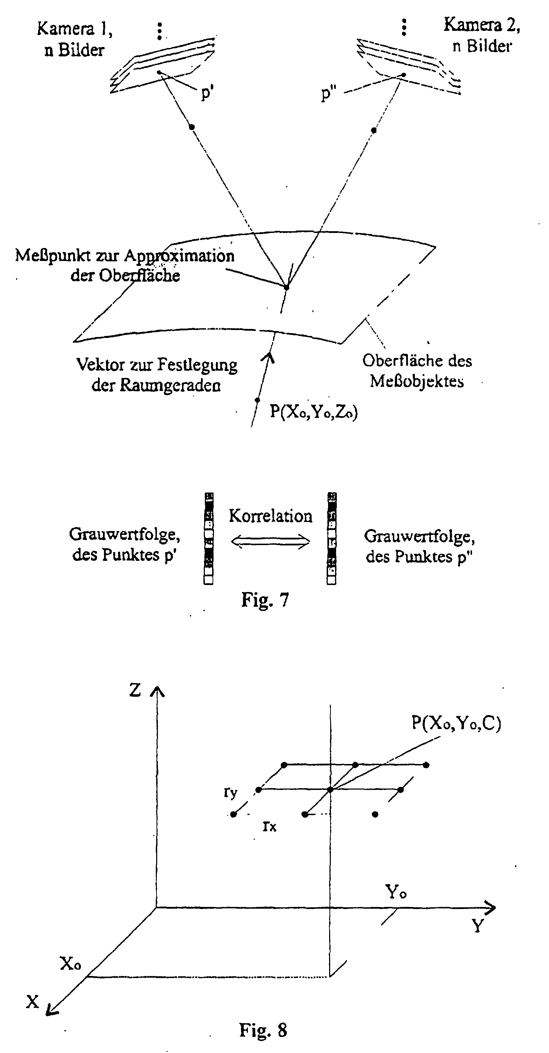

Bei bestimmten Anwendungsfällen besteht der Wunsch, die iterative 3D-Vermessung senkrecht zur erwarteten Oberfläche des Meßobjektes durchzuführen bzw in einer bestimmten, festgelegten Richtung im Raum (Fig. 7). Die Motivation hierfür resultiert in der Regel aus Routinen zur Weiterverarbeitung der 3D-Punktewolken, bei denen Daten, die auf diese Art gemessen wurden, für die weitere Bearbeitung benötigt werden. Zur Realisierung dieser Forderung wird iterative Verschiebung des Approximationspunktes entlang einer vorgegebenen Geraden im Raum durchgeführt, deren Lage durch eine vektorielle Beschreibungsform festgelegt werden kann (Fig. 6) Hierfür kann z. B. die sog. Punkt-Richtungsform verwendet werden:

$$X = X_0 + t \cdot \Delta X$$

$$Y = Y_0 + t \cdot \Delta Y$$

$$Z = Z_0 + t \cdot \Delta Z$$

mit:

$X, Y, Z$ : Koordinaten eines Punktes auf der Raumgeraden
$t$ : Parameter zur Festlegung des Punktes auf der Raumgeraden
$X_0, Y_0, Z_0$ : Koordinaten des Vektor-Basispunktes
$\Delta X, \Delta Y, \Delta Z$ : Parameter des Richtungsvektors

Die Vektor-Parameter $(X_0, Y_0, Z_0)$ und $(\Delta X, \Delta Y, \Delta Z)$ können hierbei auch als Näherungswerte interpretiert werden. Sie können z. B. aus einer vorhergehenden Vermessung der Oberfläche durch ein anderes Verfahren gewonnen werden

Die grundsätzliche Vorgehensweise zur Bestimmung des Oberflächenpunktes entspricht der des 1. Beispiels:

- Projektion des Raumpunktes in beide Sensorflächen
- Zuweisung der Grauwertfolgen zu den Projektionspunkten $p'$ und $p''$ (Fig. 7)
- Suche nach dem Korrelationsmaximums mit Hilfe eines Gradientenanstiegsverfahrens

Bei der richtungsbasierten Vermessung ist jedoch der Parameter t die Basis der iterativen Annäherung. Eine Veränderung dieses Parameters bewirkt eine Verschiebung des Approximationspunktes entlang der festgelegten Raumgeraden Dies ist eine Erweiterung der Möglichkeiten des im Kapitel xy beschriebenen Verfahrens, bei dem eine Beschränkung auf eine senkrechte Vermessung zur XY-Ebene des Raumkoordinatensystems vorliegt.

Auf diese Art kann entsprechend dem Gradientenanstiegsverfahren (in ähnlicher Weise wie Beispiel 1) iterativ derjenige Punkt bestimmt werden, der als Durchstoßpunkt der Raumgeraden durch die Oberfläche des Meßobjektes interpretiert werden kann.

**Beispiel 3:** Approximation der Oberfläche durch $3\times3$ Raumpunkte

Bei diesem Beispiel werden $3\times3$ Raumpunkte zur Approximation der Oberfläche verwendet. Die Motivation hierfür liegt in dem Wunsch, die statistische Meßunsicherheit zu erhöhen. Da jedoch die räumliche Auflösung hierbei nicht wesentlich verschlechtert werden soll, erfolgt eine Beschränkung auf $3\times3$ Raumpunkte.

Grundlage der Berechnungen ist eine $3\times3$-Punktemaske im Raumkoordinatensystem, die auf einer Ebene liegt (Fig. 8). Zur mathematischem Beschreibung dieser Punkte werden folgende Gleichungen verwendet:

$$X_i = X_0 + (i\text{-}1)\cdot\frac{r_x}{\sqrt{1 + A^2}}$$

$$Y_j = Y_0 + (j\text{-}1)\cdot\frac{r_y}{\sqrt{1 + B^2}}$$

$$Z_{i,j} = A(X_i - X_0) + B(Y_j - Y_0) + C$$

mit:

| | |
|---|---|
| $i$ , $j$ = | 0 ... 2 (Anzahl der Punkte) |
| $X_0$, $Y_0$ : | Mittelpunktkoordinaten der Modellfläche |
| $A$: | Anstieg bzw. Neigung in X-Richtung |
| $B$: | Anstieg bzw. Neigung in Y-Richtung |
| $C$: | Höhenkoordinate an der Stelle $X_0$, $Y_0$ |
| $r_x$, $r_y$: | Abstand zwischen zwei benachbarten Raumpunkten in X- bzw. Y- Richtung, wird in der Regel so festgelegt, daß der Abstand der projizierten Punkte zueinander etwa 1 Pixel beträgt |

Durch Variation der Höhe C sowie der beiden Neigungen A und B kann diese Modellfläche der realen Oberfläche angenähert werden. Die Vorgehensweise entspricht dabei der im Beispiel 1 beschriebenen:

Zunächst werden die $3\times3$ Raumpunkte in die beiden Sensorflächen der Kameras projiziert. Den Projektionspunkten können nun aus den beiden Bildfolgen die Grauwerte zugewiesen werden. Anschließend erfolgt die Suche nach dem Korrelationsmaximums mit Hilfe eines Gradientenanstiegsverfahrens Hierbei liegen bei gleicher Bildanzahl 9 mal soviele Grauwerte vor wie bei Verwendung von nur einem Raumpunkt (Beispiel 1). Es wird davon ausgegangen, daß dadurch die statistische Meßunsicherheit kleiner wird.

**Patentansprüche**

1. Verfahren zur dreidimensionalen optischen Vermessung von Objektoberflächen, bei dem Muster auf die Objektoberfläche projiziert und die Raumkoordinaten von Meßpunkten auf der Objektoberfläche unter Anwendung einer Ähnlichkeitsanalyse der Grauwertverläufe in den von mindestens zwei Matrixkameras aufgenommenen Bildern der Objektoberfläche bestimmt werden, wobei

   a) jede der Matrixkameras in an sich bekannter Weise einen Satz von N zeitlich aufeinanderfolgenden Bildern erzeugt, wobei zwischen den Bildaufnahmen das projizierte Muster um vorgegebene Werte verschoben und/oder gedreht und/oder die Struktur des Musters verändert wird,

   b) in an sich bekannter Weise ein erster Näherungspunkt zur Berechnung eines ersten Meßpunktes bestimmt wird,

   c) mittels mathematischer Projektion dem Näherungspunkt oder eine diesem Näherungspunkt benachbarte Punktmenge Koordinaten in den Sensorflächen der beiden Matrixkameras zugeordnet werden,

   d) die Grauwerte in den N Bildern jeder der beiden Matrixkameras an den Positionen der projizierten Punkte durch Subpixelinterpolation bestimmt und daraus ein Paar von Grauwertmengen ermittelt wird,

e) ausgehend von dem in Schritt b) bestimmten Näherungspunkt m ≥ 1 weitere Näherungspunkte zur Berechnung des ersten Meßpunktes bestimmt werden und mittels mathematischer Projektion diesen m Näherungspunkten oder den diesen m Näherungspunkten benachbarten Punktmengen Koordinaten in den Sensorflächen der beiden Matrixkameras zugeordnet werden,

f) die Grauwerte in den N Bildern jeder der beiden Matrixkameras an den Positionen der gem. Schritt e) projizierten Punkte durch Subpixelinterpolation bestimmt und daraus m Paare von Grauwertmengen ermittelt werden,

g) die Ähnlichkeitsmaße der zu jedem der m+1 Paare gehörenden Grauwertmengen bestimmt werden,

h) in an sich bekannter Weise als Meßpunkt auf der Oberfläche des Meßobjektes derjenige Näherungspunkt oder eine ihm benachbarte Punktmenge ermittelt wird, für den das nach den Schritten e) und f) bestimmte Paar von Grauwertmengen eine maximale Ähnlichkeit aufweist.

2. Verfahren nach Anspruch 1, wobei

die Ähnlichkeitsmaße von mindestens zwei Grauwertmengen benutzt werden, um einen neuen Näherungspunkt z. B. nach dem Gradientenanstiegsverfahren oder dem Verfahren nach Newton zu bestimmen.

3. Verfahren nach Anspruch 1 oder 2, wobei

die Näherungspunkte entlang eines vorgegebenen Richtungsvektors im Objektkoordinatensystem verschoben werden, um einen Meßpunkt zu erhalten, der auf dem Durchstoßpunkt des Richtungsvektors durch die Objektoberfläche liegt.

4. Verfahren nach Anspruch 3, wobei

der Richtungsvektor parallel zu der Achse des Objektkoordinatensystems liegt, auf welche die Höhenkoordinaten der Meßpunkte bezogen werden.

5. Verfahren nach einem der vorhergehenden Ansprüche, wobei

aus den Ähnlichkeitsmaßen, die einer bestimmten Anzahl von Näherungspunkten zugeordnet werden, die Koordinaten eines neuen Näherungspunktes bestimmt werden.

6. Verfahren nach einem der Ansprüche 1 bis 5, wobei

die projizierten Muster eine periodische streifenförmige Struktur aufweisen, die etwa senkrecht zu den Epipolarlinien auf den Sensorflächen verläuft, und sich die zeitlich aufeinanderfolgenden Muster dadurch unterscheiden, daß die Streifen jeweils um einen Bruchteil ihrer Periode verschoben werden.

7. Verfahren nach einem der Ansprüche 1 bis 5, wobei

die projizierten Muster eine stochastische Struktur aufweisen und sich die zeitlich aufeinanderfolgenden Muster dadurch unterscheiden, daß sie um einen vorgegebenen Betrag verschoben oder verdreht werden.

8. Verfahren nach einem der Ansprüchel bis 5, wobei

die projizierten Muster eine stochastische Struktur aufweisen und sich die zeitlich aufeinanderfolgenden Muster dadurch unterscheiden, daß sie eine voneinander unterschiedliche Struktur aufweisen.

**Claims**

1. Process for the three-dimensional optical measuring of object planes in which frames are projected onto the object plane and the space co-ordinates of measuring points on the object plane are determined by applying a similarity analysis of the grey value gradient in the images of the object plane taken by at least two matrix cameras,
whereby

a) each of the matrix cameras generates, in a known manner, a set of N images in a time sequence, whereby between the takes the projected frame is shifted by the preset value and/or is turned and/or the structure of the frame is changed.

b) in a known manner a first approximation point for the calculation of a first measuring point is determined

c) by means of mathematical projection c-ordinates are assigned to the approximation point or a bundle of points in the vicinity of this approximation point in the sensor planes of the two matrix cameras.

d) the grey values in the N images of both the matrix cameras are determined by the position of the projected points by sub-pixel interpolation and a pair of grey values determined therefrom,

e) starting from the approximation point m >1 determined in b) further approximation points for the calculation of the first measuring point are determined and are assigned by means of mathematical projection co-ordinates to these m approximation points or to the point bundles in the vicinity of the m approximation points in the sensor planes of the two matrix cameras,

f) the grey values in the N images of each of the two matrix cameras are determined by the sub-pixel interpolation at the positions determined acc to step e) and the m pairs of grey value quantities are evaluated therefrom

g) the similarity dimensions of the grey value quantities appertaining to each of the m+1 pairs are determined

h) in a known manner, as measuring point on the plane of the measuring object the approximation point or a point cluster in its vicinity is determined for which the pair of grey quantities determined according to steps e) and f) shows the maximum similarity

2. Procedure according to claim 1, whereby

the similarity dimensions of at least two grey value quantities are used to determine a new approximation point e.g. acc to the gradient incline process or the process acc to Newton.

3. Procedure according to claim 1 or 2, whereby

the approximation points along a given direction vector in the object co-ordinate system are displaced to maintain a measuring point that lies on the piercing point of the direction vector through the object plane.

4. Procedure according to claim 3, whereby

the direction vector lies parallel to the axle of the object co-ordinate system to which the height co-ordinates of the measuring points are referred.

5. Procedure according to one of the above claims, whereby

the co-ordinates of a new approximation point are determined from the similarity measurements that are assigned to a certain number of approximation points.

6. Procedure according to one of the claims 1 to 5, whereby

the projected frames show a periodic stripe-structure that runs approx. vertically to the epipolar lines on the sensor planes and that the frames in sequential intervals vary in that the lines are displaced by a fraction of a period.

7. Process according to one of the claims 1 to 5, whereby

the projected frames show a stochastic structure and differ in that the frames following at sequential intervals are displaced or rotated by a preset value

8. Process according to one of the claims 1 to 5, whereby

the projected frames show a stochastic structure and in that the frames following at sequential intervals differ in that they have separate structures

## Revendications

1. Procédé pour la mesure optique tridimensionnelle de surfaces d'objets, où l'échantillon est projeté sur la surface d'objet et les coordonnées spatiales de points de mesure sur la surface d'objet sont définies en appliquant une analyse de similitude des courbes de valeurs de gris dans les images de la surface d'objet prises par au moins deux caméras matricielles, où

a) chacune des caméras matricielles génère d'une manière connue en soi un jeu d'images N successives dans le temps, le modèle projeté étant décalé et/ou tourné et/ou la structure du modèle étant modifiée entre les prises de vue,

b) un premier point d'approche est défini d'une manière connue en soi pour calculer un premier point de mesure,

c) au moyen d'une projection mathématique, le point d'approche ou une quantité de points voisins de ce point d'approche sont associés à des coordonnées dans les surfaces de capteur des deux caméras matricielles,

d) les valeurs de gris sont définies dans les images N de chacune des deux caméras matricielles aux positions des points projetés par interpolation subpixels et à partir de là une paire de quantités de valeurs de gris sont déterminées,

e) à partir du point d'approche défini à l'étape b) $m \geq 1$, d'autres points d'approche sont définis pour le calcul du premier point de mesure et par la projection mathématique ces points d'approche m ou les quantités de point voisins des points d'approche m sont associés aux coordonnés dans les surfaces de capteurs des deux caméras matricielles,

f) les valeurs de gris sont définies dans les images H de chacune des deux caméras matricielles aux positions des points projetés d'après l'étape e) par interpolation subpixel et à partir de là des paires de quantités de valeurs de gris sont déterminées,

g) la mesure de similitude des quantités de valeur de gris faisant partie à chacun des paires m+1 sont définies,

h) le point d'(approche ou une quantité de point qui lui sont voisins de manière connue en soi en tant que point de mesure sur la surface de l'objet de mesure sont définis, point de mesure pour lequel la paire de quantités de valeur de gris définie d'après les étapes c) et f) présente une similitude maximale.

2. Procédé selon la revendication 1, où

les mesures de similitude d'au moins deux quantités de valeur de gris sont utilisées pour définir un nouveau point d'approche par exemple d'après le procédé d'augmentation des gradients ou d'après le procédé de Newton.

3. Procédé selon la revendication 1 ou 2, où les points d'approche sont déplacés dans le système de coordonnées d'objet le long d'un vecteur directionnel prédéfini pour obtenir un point de mesure qui se trouve sur le point de percée du vecteur directionnel à travers la surface de l'objet.

4. Procédé selon la revendication 3, où

le vecteur directionnel est parallèle à l'axe du système de coordonnées de l'objet, axe auquel sont rapportées les coordonnées en hauteur des points de mesure.

5. Procédé selon l'une des revendications précédentes, où les coordonnées d'un nouveau point d'approche sont déterminées à partir des mesures de similitude qui sont associées à un certain nombre de points d'approche.

6. Procédé selon l'une des revendications 1 à 5, où les modèles projetés présentent une structure périodique striée qui s'étend approximativement perpendiculairement aux lignes épipolaires sur les surfaces de capteur et les modèles successifs dans le temps se différencient dans le fait que les stries sont décalées respectivement d'une fraction de leur période.

7. Procédé selon l'une des revendications 1 à 5, où les modèles projetés présentent une structure stochastique et les modèles successifs dans le temps se différencient dans le fait qu'ils sont tournés ou déplacés d'un montant prédéterminé.

8. Procédé selon l'une des revendications 1 à 5, où les modèles projetés présentent une structure stochastique et les modèles successifs dans le temps se différencient dans le fait qu'ils présentent une structure différente les uns des autres

Teil der Karosserie:
Autotür

Matrixkamera 1 und 2

3D-Daten

Fig. 1

Projektor    n Muster

Kamera 1,
n Bilder

Kamera 2,
n Bilder

Meßobjekt

Fig. 2

**Fig. 3**

Kamera 1,
n Bilder

Kamera 2,
n Bilder

$p'$

$p''$

Meßpunkt zur Approximation
der Oberfläche
$P(X_o, Y_o, Z)$

Oberfläche des
Meßobjektes

Grauwertfolge,
des Punktes $p'$

Korrelation

Grauwertfolge,
des Punktes $p''$

**Fig. 4**

Fig. 5

Fig. 6

Kamera 1,
n Bilder

Kamera 2,
n Bilder

p'

p"

Meßpunkt zur Approximation
der Oberfläche

Vektor zur Festlegung
der Raumgeraden

Oberfläche des
Meßobjektes

$P(X_o, Y_o, Z_o)$

Grauwertfolge,
des Punktes p'

Korrelation

Grauwertfolge,
des Punktes p"

Fig. 7

$P(X_o, Y_o, C)$

$r_y$

$r_x$

Z

$Y_o$

Y

$X_o$

X

Fig. 8